(19) **Europäisches Patentamt**
**European Patent Office**
**Office européen des brevets**

(11) **EP 4 389 648 A1**

(12) **EUROPEAN PATENT APPLICATION**

(43) Date of publication:
**26.06.2024 Bulletin 2024/26**

(21) Application number: **22215864.4**

(22) Date of filing: **22.12.2022**

(51) International Patent Classification (IPC):
**B65G 15/24** (2006.01)    **G06N 3/082** (2023.01)
**G06N 3/092** (2023.01)    **G06N 3/045** (2023.01)

(52) Cooperative Patent Classification (CPC):
**G06N 3/082; B65G 43/10; G06N 3/045;**
**G06N 3/084; G06N 3/092**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Bischoff, Martin**
  **85653 Aying, Großhelfendorf (DE)**
• **Tokic, Michel**
  **88069 Tettnang (DE)**
• **von Beuningen, Anja**
  **99085 Erfurt (DE)**

(74) Representative: **Siemens Patent Attorneys**
**Postfach 22 16 34**
**80506 München (DE)**

(54) **A COMPUTER-IMPLEMENTED METHOD FOR CONFIGURING A CONTROLLER FOR A TECHNICAL SYSTEM**

(57) The invention refers to a computer-implemented method for configuring a controller (CON) for a technical system (TS), the method comprising the following steps:
a) processing a test data set (DS) by a first neural policy network (PN1), where the test data set (DS) comprises a plurality of test patterns (TPA), each test pattern (TPA) being another input state vector (x), where the processing of the test data set (DS) is based on an error backpropagation (EBP) performed for each test pattern (TPA), where the error backpropagation (EBP) propagates for each test pattern (TPA) an error ($E_t$) between an output action vector ($y_t$) generated by the first neural policy network (PN1) based on the input state vector ($x_t$) of a respective test pattern (TPA) and this output action vector ($y_{t,d}$) modified by a predetermined variation back through the first neural policy network (PN1), thus resulting in a sensitivity value ($SV_i$) for each state ($x_i$) of the input state vector (x) at each time point (tp) of a plurality of time points (tp);
b) determining a reduced input state vector (xr) by deleting states ($x_i$) at time points (tp) from the input state vector (x) based on a threshold criterion (TC) applied to the sensitivity values ($SV_i$);
c) learning a second neural policy network (PN2) configured to generate the output action vector (y) based on the reduced input state vector (xr) by reinforcement learning.

## FIG 2

$$PN1\ (x, x_i, tp; y, y_k),\ RE\ (SI),\ DS\ (TPA)$$

**Description**

Modern controllers for technical systems are often based on artificial intelligence, e.g. on neural policy networks. Such neural policy networks are neural networks providing at least one control action performed by the controller on the technical system based on corresponding states of the technical system input to the neural policy network. A neural policy network is learned by so-called reinforcement learning being based on a reward which is a corresponding control gain to be achieved by the controller.

In order to achieve a reliable control of a technical system using a neural policy network, the network usually considers as input not only states of the technical system at a current time point but also at a plurality of past time points. This results in a high number of input states for the neural policy network so that a lot of computational resources are needed both for learning the neural policy network and for executing the learned policy network during the control performed by the controller.

It is an object of the invention to provide a computer-implemented method for configuring a controller for a technical system, where the method as well as the controller need less computational resources.

This object is achieved by the method according to claim 1, the computer program product according to claim 11, the computer program according to claim 12 as well as the controller according to claim 13. Preferred embodiments are described in the dependent claims.

The computer-implemented method for configuring a controller for a technical system according to the invention processes a first neural policy network configured to generate an output action vector which includes one or more actions to be performed on the technical system at a current time point based on an input state vector fed to the first neural policy network and including one or more states of the technical system at a plurality of time points being subsequent time points comprising the current time point and one or more past time points. This first neural policy network is being learned or has been learned by reinforcement learning in dependency on a reward for the output action vector generated by the first neural policy network. According to the above formulation "is being learned or has been learned", the learning or training of the first neural policy network may be part of the method of the invention or may not be part of the method of the invention.

In a step a) of the method according to the invention, a test data set is processed by the (learned) first neural policy network, where the test data set comprises a plurality of test patterns, each test pattern being another input state vector as defined above, where the processing of the test data set is based on an error backpropagation performed for each test pattern. The method of error backpropagation is well-known from the prior art. According to the invention, a slightly modified error backpropagation in comparison to the prior art is used. This modified error backpropagation propagates for each test pattern an error between the output action vector generated by the first neural policy network based on the input state vector of a respective test pattern and this output action vector modified by a predetermined variation back through the first neural policy network without changing weights between layers of the first neural policy network, where the change of weights is performed by the error backpropagation according to the prior art. Preferably, the above predetermined variation is an infinitesimal variation of the output action vector.

As a result of the error backpropagation as described above, a sensitivity value in the form of a residual error for each state of the input state vector at each time point of the plurality of time points is obtained. Due to the above definition of the backpropagated error, the residual error reflects the sensitivity of a corresponding state at a corresponding time point within the input state vector with respect to changes of the output action vector. This finding is used to reduce the number of elements included in the input state vector according to step b) as described below.

In step b) of the method of the invention, a reduced input state vector is determined by deleting states at time points from the input state vector based on a threshold criterion applied to the sensitivity values, where states at time points having low sensitivity values are deleted in case that the low sensitivity values do not fulfill the threshold criterion. The term "threshold criterion" is to be interpreted broadly. The criterion may be defined explicitly based on a fixed threshold. However, the threshold criterion may also be given by a threshold implicitly defined by the threshold criterion.

In step c) of the method according to the invention, a second neural policy network is learned, where the second neural policy network is configured to generate the output action vector based on the reduced input state vector. The learning of the second neural policy network is based on reinforcement learning in dependency on a reward for the output action vector generated by the second neural policy network. In other words, the second neural policy network is a modified first neural policy network having the same output state vector but a reduced number of input states. This learning can be performed with less computational resources. The reward for the second neural policy network may be determined in the same way as for the first neural policy network, e.g. based on a data driven model having been learned before. However, the reward may also be determined differently, e.g. based on a newly learned data driven model taking into account the reduced number of elements within the input state vector.

In step b) of one variant of the method according to the invention, the sensitivity values belonging to the same time point are summed over the states of the input state vector, resulting in a sum of sensitivity values for each time point of the plurality of time points, where the threshold criterion is such that states at time points for which time points the sum of sensitivity values does not fulfill the threshold criterion are at least partially (e.g. fully) deleted from the input state vector.

In a preferred embodiment of the above variant, the threshold criterion is such that the states at time points associated with the N highest sums of sensitivity values are not deleted from the input state vector, where N is a predetermined natural number. Alternatively, the threshold criterion is such that the states at time points associated with sums of sensitivity values above a predetermined threshold are not deleted from the input state vector.

In another embodiment of step b) according to the method of the invention, the sensitivity values referring to the same state subset of one or more states out of the states of the input state vector are summed over the time points of the plurality of time points, resulting in a sum of sensitivity values for each state subset, where the threshold criterion is such that the states of the state subsets for which state subsets the sum of sensitivity values does not fulfill the threshold criterion are at least partially (e.g. fully) deleted from the input state vector.

In a preferred variant of the above embodiment, the threshold criterion is such that the states of state subsets associated with the N highest sums of sensitivity values are not deleted from the input state vector, where N is a predetermined natural number. Alternatively, the threshold criterion is such that the states of the state subsets associated with sums of sensitivity values above a predetermined threshold are not deleted from the input state vector.

The reward for learning the first neural policy network may be defined in different ways. In a preferred embodiment, the reward is obtained from a first simulation of the technical system, particularly a simulation based on a physics-engine or a simulation based on a data driven model (e.g. a neural network). Preferably, the first simulation predicts one or more states of the technical system at a future time point based on the output action vector at the current time point and the input state vector at the plurality of time points (i.e. at the current time point and the one or more past time points) where the reward is derived from the predicted one or more states of the technical system at the future time point.

In another embodiment of the method according to the invention, the reward for learning the second neural policy network is obtained from a second simulation of the technical system, particularly a simulation based on a physics-engine or a simulation based on a data driven model (e.g. a neural network). The second simulation may be the same simulation as the above-mentioned first simulation or it may differ therefrom. Preferably, the second simulation predicts one or more states of the technical system at a future time point based on the output action vector at the current time point and the reduced input state vector at the plurality of time points (i.e. at the current time point and the one or more past time points, where some time points may be missing due to the reduced number of states) where the reward is derived from the predicted one or more states of the technical system at the future time point.

The method according to the invention can be used for different technical systems. In a preferred embodiment, the technical system is a conveyer system for pieces of goods, where the conveyer system comprises a conveyer path having several adjoining conveyers, each driven by a respective drive, where the output action vector for the first neural policy network comprises the change of the velocities of at least some of the conveyers as actions. The pieces of goods are transported along the conveyer path from the first to the last conveyer. Preferably, the change of the velocities of all conveyers in the conveyer path except the first conveyor and the last conveyer form the actions. This is because the velocities of the first conveyor and the last conveyer are usually preset and cannot be changed by a corresponding controller.

In a preferred variant of the above embodiment, the states of the input state vector for the first neural policy network comprise:

- the velocities of at least some of the conveyers; and/or
- quantities related to the triggering of one or more sensors, e.g. one or more light barriers, by pieces of goods passing the one or more sensors, where the one or more sensors are arranged besides the conveyor path; and/or
- a vector having a fixed number of vector entries, where each vector entry is associated with a portion of the conveyor path and indicates how much of the portion is occupied by a piece of goods, where the conveyor path is divided in portions of equal lengths; and/or
- the position of one or more slots on the conveyor at the end of the conveyor path.

Preferably, the above velocities included in the input state vector comprise the velocities of all conveyers in the conveyor path. Preferably, the above quantities related to the triggering of one or more sensors refer to the time period which has passed after the last triggering of the respective sensor. Preferably, the length of the above portions in which the conveyer path is divided refers to the longitudinal length along the conveyer path from the first conveyer to the last conveyer.

In another preferred embodiment, the reward for the output action vector generated by the first neural policy network and/or the reward for the output action vector generated by the second neural policy network have a higher value in case that the condition is fulfilled that a piece of goods at least partially and preferably completely lies on a predetermined location on the conveyer at the end of the conveyer path in comparison to the case that this condition is not fulfilled. Preferably, the location is given by the position of the one or more slots on the conveyer at the end of the conveyer path as defined in the foregoing embodiment.

The reward of the first neural policy network and the second neural policy network may also depend on other quantities than the above-described predetermined location. E.g., the reward may depend on the collision of pieces of goods where the reward is higher when such a collision does not occur. Furthermore, the reward may depend on the similarity of the velocities of adjacent conveyers where the reward is higher in case that the velocities are more similar. Furthermore, the reward may depend on the condition that a minimum or target distance between two pieces of goods is maintained where the reward is higher in case that such a distance is maintained in comparison to the situation where this distance is not maintained.

Besides the above method, the invention refers to a computer program product with program code, which is stored on a machine-readable carrier, for carrying out a method according to the invention or one or more preferred embodiments of the invention when the program code is executed on a computer.

Furthermore, the invention refers to a computer program with program code for carrying out the method according to the invention or one or more preferred embodiments of the invention when the program code is executed on a computer.

Furthermore, the invention refers to a controller for a technical system, where the controller is (i.e. has been) configured by the method according to the invention or one or more preferred embodiments thereof.

In the following, an embodiment of the invention will be described in detail with respect to the accompanying drawings wherein:

Fig. 1        shows a schematic view of a technical system in the form of a conveyor system having a controller configured based on an embodiment of the invention;

Fig. 2        shows a flow chart describing the steps for configuring the controller of Fig. 1 based on an embodiment of the invention;

Fig. 3        is an illustration describing the error backpropagation used in Fig. 2; and

Fig. 4 to Fig. 6    show different embodiments of the thresh-old criterion used in Fig. 2.

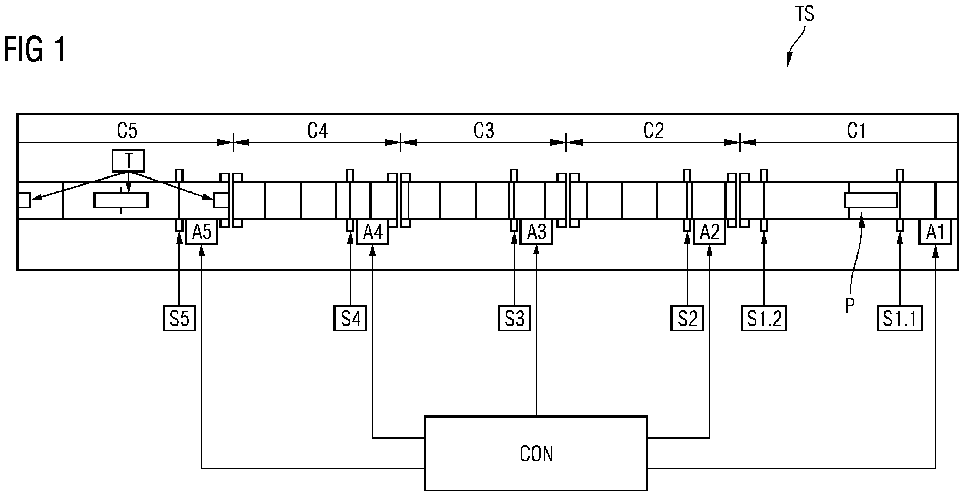

In the following, an embodiment of the invention will be described with respect to a technical system TS in the form of a conveyor system which is illustrated in Fig. 1. The conveyor system comprises a conveyor path having five conveyors C1, C2, C3, C4 and C5. Pieces of goods are placed on the first conveyor C1 and then transported from this conveyor via the conveyors C2, C3 and C4 to the last conveyor C5 in the conveyor path. As an example, Fig. 1 shows one piece of goods P located on the first conveyor C1.

Each of the conveyors C1 to C5 has a corresponding drive A1 to A5 for driving the respective conveyor. Furthermore, sensors in the form of light barriers are located along the conveyor path. Particularly, two light barriers S1.1 and S1.2 are provided besides the first conveyor C1, a light barrier S2 is provided besides the second conveyor C2, a light barrier S3 is provided besides the third conveyor C3, a light barrier S4 is provided besides the fourth conveyor C4 and a light barrier S5 is provided besides the fifth conveyor C5. Light barriers provide sensor signals in the form of a rising edge when the corresponding piece of goods enters the light barrier and in the form of a falling edge when the corresponding piece of goods leaves the light barrier.

In order to guarantee a correct handling of pieces of goods arriving at the last conveyor C5, the pieces of goods shall be located on corresponding slots T on the last conveyor C5. In one example, the pieces of goods transported by the conveyor system shall be packaged when they lie at a particular point on the last conveyor C5. In order to enable this packaging by a corresponding packaging unit, a correct position of the pieces of goods on the slots T is essential so that the pieces of goods can be gripped by a gripper of a packaging unit. The technical system TS shown in Fig. 1 is controlled by a controller CON. This controller uses a second neural policy network being a result of the configuration of the controller CON. The configuration of the controller and the corresponding second neural policy network will be described below.

The controller CON performs actions included in an output action vector output by the second neural policy network, where these actions are adjustments of the velocities of at least some of the conveyors C1 to C5. Those adjustments are performed by actuating on the drives A1, A2, ..., A5 used for driving the respective conveyors C1, C2, ..., C5. Preferably, only the velocities of the conveyors C2, C3 and C4 are adjusted by the controller CON whereas the velocities of the conveyors C1 and C5 remain fixed.

In order to generate an output action vector at a current time point, the second neural policy network receives an input state vector comprising a plurality of states of the conveyor system for a plurality of time points comprising the current time point and several past time points. Based on this input state vector, the output action vector is determined by the second neural policy network.

The configuration of the controller CON is derived from a first trained neural policy network which could also be used to control the conveyor system by generating the same output action vector but using a higher number of states at corresponding time points within the input state vector. According to the invention, the number of states of the input state vector are reduced for the second neural policy network based on sensitivity values as will be described below.

The input state vector for the first neural policy network comprises the following states at the current time point and several past time points:

- the velocities of the conveyors C1 to C5;
- quantities related to the triggering of the light barriers S1.1, S1.2, S2, ..., S5 associated with a rising or falling edge in the corresponding signal of the light barrier, where the quantity of a light barrier preferably refers to the time period having been passed after the last triggering of the light barrier;
- a vector having a fixed number of vector entries, where each vector entry is associated with a portion of the conveyor path and indicates how much of the portion is occupied by a piece of goods, where the conveyor path is divided in portions of equal length in its longitudinal direction along the conveyors C1 to C5;
- the position of the slots T on the last conveyor at the end of the conveyor path.

As mentioned in the foregoing, the states indicated above are used for the first neural policy network. Contrary to that, the second neural policy network uses a reduced number of states taken from the states as indicated above, thus enabling a control with less computational resources. Particularly, the learning or training of the second neural policy network needs less computational resources in comparison to the first neural policy network. Both the first neural policy network and the second neural policy network use a reward during training, where the reward can be obtained from a simulation of the conveyor system, e.g. a simulation based on physics-engine or a simulation based on a data driven model, particularly another neural network, as will be described below.

The learning of the first and second neural policy networks is a reinforcement learning, which tries to maximize the cumulative reward over time. In the embodiment described herein, the reward has a higher value in case that a piece of goods lies at least partially within a slot T on the conveyor C5 in comparison to the case where the piece of goods is not located on a slot. Particularly, the reward can be defined such that the reward raises with a greater overlap between the piece of goods and a corresponding slot. The reward may also depend on other quantities, e.g. the reward can be higher in case that collisions between pieces of goods on the conveyor path do not occur or in case that the velocities of adjacent conveyors are similar to each other or in case that a minimum or a target distance between two pieces of goods is kept.

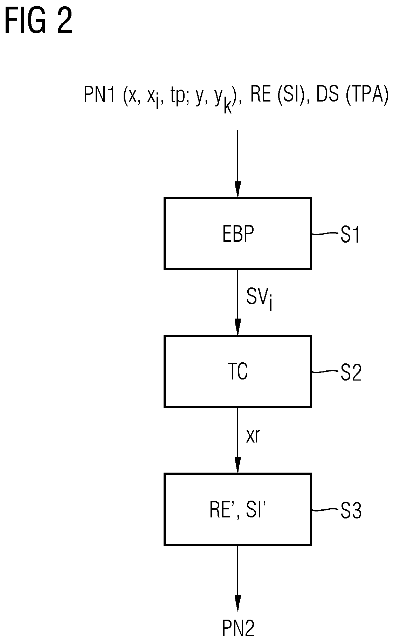

Fig. 2 illustrates the configuration of the controller CON of Fig. 1 according to an embodiment of the invention. The configuration uses a trained first neural policy network as a starting point. This first neural policy network is designated as PN1 in Fig. 2. The first neural policy network PN1 receives an input state vector x having states $x_i$ at a plurality of time points tp comprising the current time point and several past time points. The index i refers to a state at the corresponding time point, i.e. the index characterizes the state as well as the time point at which the state is observed. As mentioned above, the first neural policy network PN1 generates an output in the form of an output action vector y having the actions $y_k$ at the current time point. I.e., the index k runs about all actions at the current time point. The method shown in Fig. 2 uses as an input the neural policy network PN1, which has been trained beforehand. Nevertheless, the training of the first neural policy network may also be part of this method.

As mentioned above, the first neural policy network PN1 is trained by reinforcement learning using a reward, which is designated as RE in Fig. 2. In the embodiment described herein, this reward is obtained from a simulation SI of the technical system, e.g. a simulation based on a physical model/physics-engine or a simulation based on a data driven model. The simulation SI predicts one or more states of the conveyor system at a future time point based on the output action vector y at the current time point and the input state vector x where the reward is derived from the predicted one or more states of the conveyor system at the future time point. Furthermore, the method of Fig. 2 uses a test data set DS having several test patterns TPA which are determined beforehand. Each test pattern TPA of the test data set DS refers to a corresponding input state vector which has occurred in the conveyor system of Fig. 1.

In a preferred embodiment, the states forming the test patterns of a test data set are generated as follows:

- At first, pieces of goods are located on the first conveyor within an average frequency derived from the machine specification of the conveyor system. Until the pieces of goods have left the last light barrier on the last conveyor, the states of the conveyor system are detected based on the machine clock of the system.
- Thereafter, two pieces of goods are located in an average distance on the first conveyor, the average distance being derived from the machine specification of the conveyor system. Then, the states of the conveyor system are detected based on the machine clock of the system. Optionally, this step can be repeated where the distance between the two pieces of goods is successively shifted by half of the length of the piece of goods.
- The above step is repeated with three, four and more pieces of goods until a maximum number of pieces of goods is reached. The maximum number is given by the frequency of the slots T on the last conveyor.

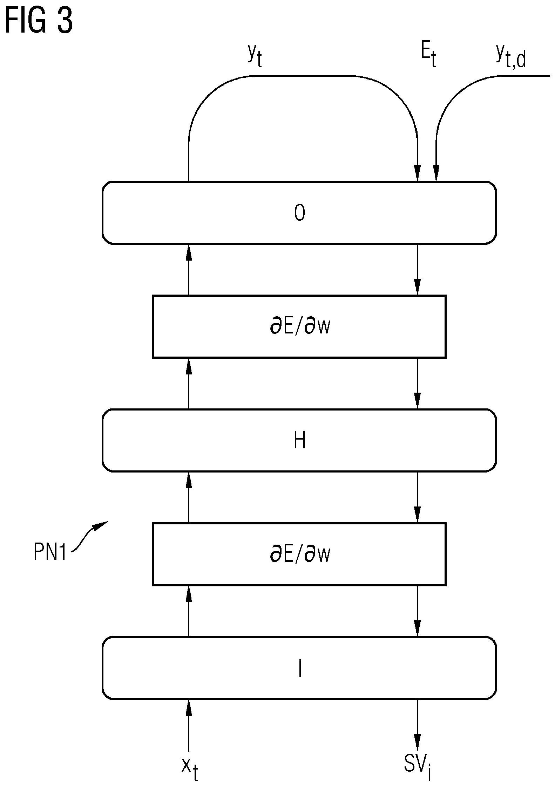

In step S1 of Fig. 2, an error backpropagation EBP is performed based on the test patterns TPA of the test data set DS. The method of error backpropagation is well-known for a skilled person. In the embodiment described herein, an error backpropagation slightly modified in comparison to the well-known error backpropagation is performed. This error backpropagation is applied to the first neural policy network PN1. Fig. 3 shows the modified error backpropagation performed in step S1. According to this error backpropagation, the first neural policy network PN1 receives as an input the corresponding input state vectors of the test patterns TPA within the test data set DS. Those input state vectors are designated as $x_t$, where the index t specifies a corresponding test pattern.

The input state vector $x_t$ is fed to an input layer I of the first neural policy network PN1 and is thereafter processed by hidden layers of the first neural policy network PN1 where for the sake of clarity only one hidden layer H is shown. The upper layer of the first neural policy network PN1 is the output layer O providing the above described output action vector which is designated as $y_t$ for the corresponding test pattern. In a conventional error backpropagation method, the error between this output $y_t$ and the expected output is propagated back through the network. As the error propagation shall be applied to a neural policy network, there is no expected output because the neural policy network is learned by reinforcement learning based on a reward and not on an expected output.

In order to apply the error backpropagation to the first neural policy network PN1, the corresponding output action vector $y_t$ is varied by a small infinitesimal amount $\varepsilon$ resulting in a modified output action vector $y_{t,d}$. As the error $E_t$, the deviation between the vector $y_t$ and the vector $y_{t,d}$ is propagated back through the first neural policy network PN1. In a preferred embodiment, this error $E_t$ is a mean squared error between $y_t$ and $y_{t,d}$. The backpropagation of this error is made as known from the prior art with the only difference that the weights between the layers of the first neural policy network PN1 are not adjusted.

The error backpropagation results in the following residual errors $SV_i$ for the states of the input state vector at corresponding time points, where each residual error is the sum of the gradients of the errors $E_t$ with respect to the corresponding state and time point over all test patterns:

$$SV_i = \partial(x_i) = \frac{1}{T}\sum_t |\partial_t(x_i)| = \frac{1}{T}\sum_t \left|\frac{\partial E_t}{\partial x_i}\right| = \frac{1}{T}\sum_t \left|(y_t - y_t^d)\frac{\partial y_t}{\partial x_i}\right|$$

Due to the above definition of the error $E_t$, the residual error $SV_i$ obtained by the error backpropagation reflects the sensitivity of the corresponding state at the corresponding time point with respect to a variation of the output state vector. Therefore, the residual error $SV_i$ is regarded as a sensitivity value. As states with lower sensitivity values have less influence on the output state vector, a threshold criterion TC is used in order to delete such states from the input state vector.

The threshold criterion TC is applied in the step S2 of Fig. 2. Based on this threshold criterion, the number of states at corresponding time points within the input state vector x is reduced, thus resulting in an input state vector xr having a reduced number of states at corresponding time points.

The reduction of the states within input state vector based on the threshold criterion TC can be performed in different ways. In other words, the threshold criterion can be defined in different ways. However, the criterion has to be defined such that states at corresponding time points with lower sensitivity values are deleted.

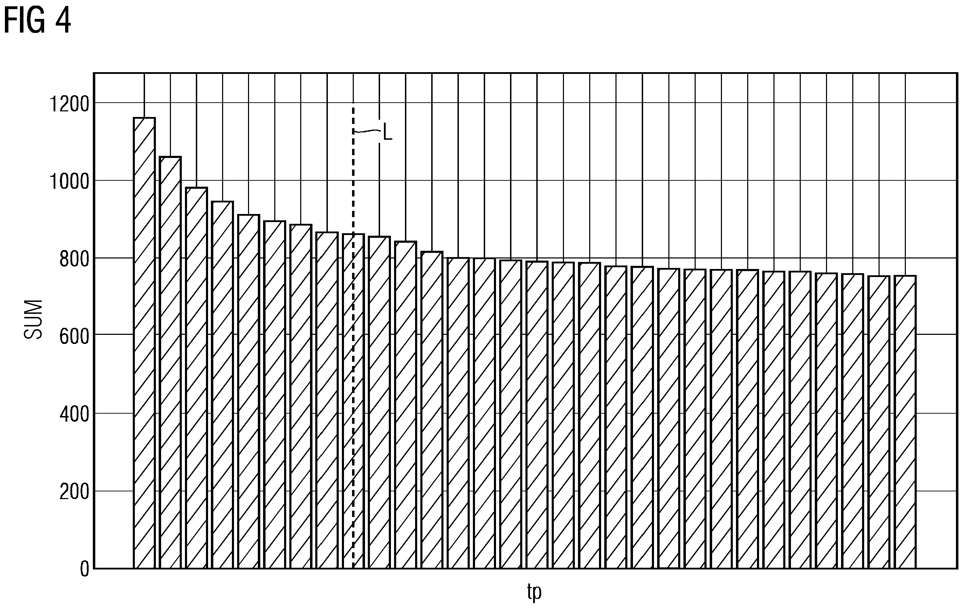

Fig. 4 to Fig. 6 show different examples of threshold criteria which may be used within the embodiment described herein. Fig. 4 shows a diagram where the abscissa refers to the time points tp considered within the input state vector x. For each time point, the sensitivity values $SV_i$ of all states at the respective time point are summed up. The values of those sums are illustrated as bars along the ordinate SUM of Fig. 4. Those sums are ordered along the abscissa such that the values of the sums become lower from left to right.

The threshold criterion in Fig. 4 is defined such that the states for time points with the N highest sums of sensitivity values are still included in the reduced input state vector xr whereas the other states at the corresponding time points are deleted. This is indicated by a vertical line L in Fig. 4. All states to the right on the line L are deleted from the input state vector whereas the states to the left of the line L are kept within the state vector resulting in the reduced state vector xr. The above criterion can be modified in that a fixed threshold is used so that the states corresponding to sums of sensitivity values higher than the fixed threshold are kept within the reduced input state vector, whereas the other states are no longer included within the reduced input state vector.

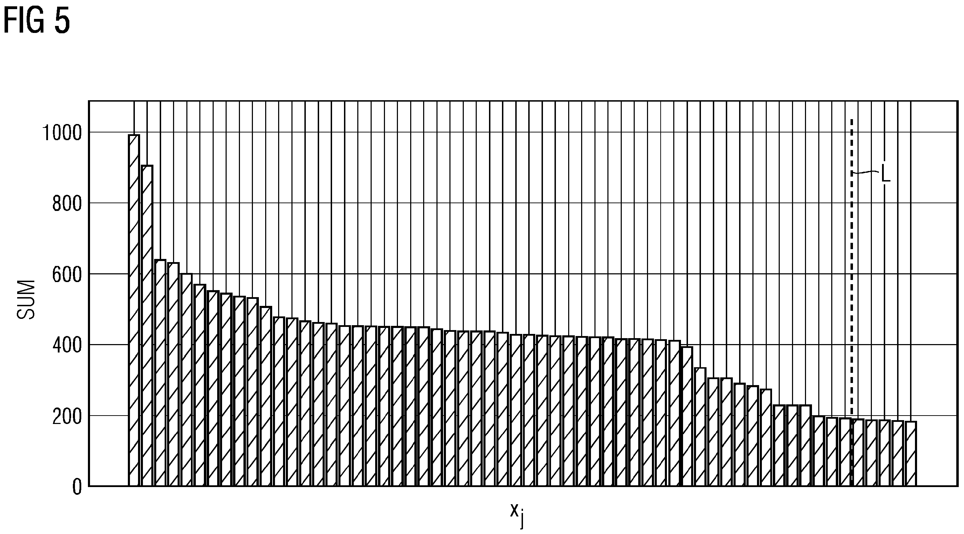

Fig. 5 shows another example of a threshold criterion. In Fig. 5, the abscissa indicates the corresponding states $x_j$ within the input state vector x without distinguishing between time points. The ordinate SUM reflects the sum of sensitivity values $SV_i$ of the corresponding states over all time points within the plurality of time points tp. Those sums are ordered from left to right such that the values of the sums become low from left to right. The threshold criterion is defined such that all states having a corresponding sum of sensitivity values over the time points higher than a predetermined threshold are kept within the reduced input state vector, whereas the other states are no longer included within the reduced input state vector. This is indicated by a vertical line L in Fig. 4. All states at the right to the line L are deleted from the input state vector whereas the states to the left of the line L are kept within the state vector resulting in the reduced state vector xr. Alternatively, the threshold criterion according to Fig. 5 may also be defined such that a predetermined number of states having the highest sensitivity values are kept within the reduced input state vector xr whereas the other states are cancelled.

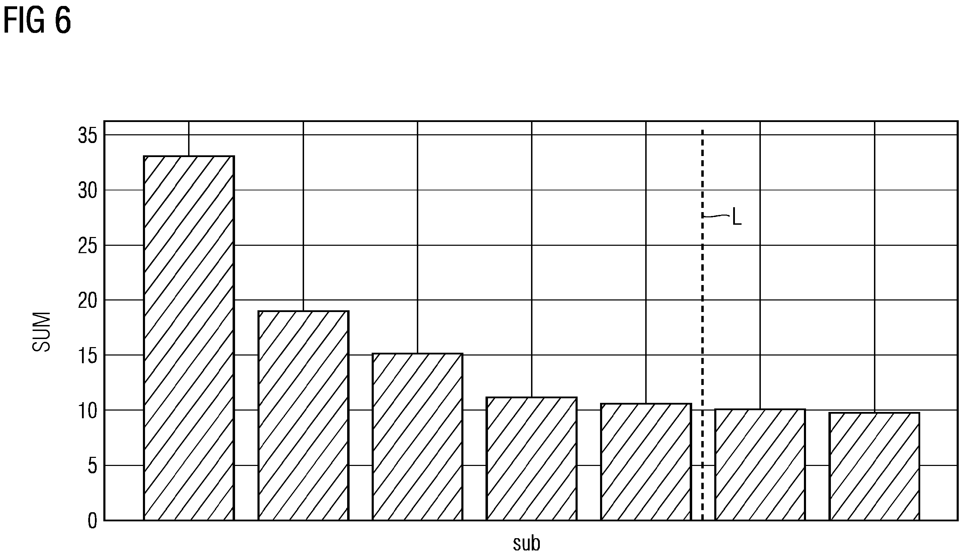

Fig. 6 shows another example of a threshold criterion. Instead of single states summed over the plurality of time points tp as described with respect to Fig. 5, groups of states having several states form the basis of the threshold criterion in Fig. 6. The abscissa sub in Fig. 6 indicates corresponding groups of states. For each group of states, the sensitivity values of all states within the group are summed over the plurality of time points resulting in sums of sensitivity values indicated as bars along the ordinate SUM in Fig. 6. The groups of states are ordered in Fig. 6 such that the groups having lower sum of sensitivity values are located more to the right of Fig. 6. The threshold criterion according to Fig. 6 is based on a fixed threshold, where the states of all group of states having sum of sensitivity values higher than the threshold are included within the reduced input state vector whereas the other states are deleted. This is indicated by a vertical line L in Fig. 6. The two group of states at the right of the line L are no longer included within the reduced input state vector xr whereas the five group of states to the left of the line L are kept within the reduced input state vector xr. Instead of using a fixed threshold, the threshold criterion may also be defined such that a predetermined number of groups of states having the highest sums of sensitivity values are kept within the reduced input state vector xr.

In another preferred embodiment, the above threshold criteria may be modified such that not all states are removed based on the criterion but only a certain number of states. Furthermore, the number of states to be removed may also be chosen in dependance on the values of the sum of the sensitivity values. E.g., a first threshold value and a second threshold value lower than the first threshold value may be used as threshold criterion. The states corresponding to sums of sensitivity values higher than the first threshold value are completely kept within the input state vector. In case that the sums of sensitivity values of the corresponding states lie between the first threshold value and the second threshold, only some of the states are deleted. In case that the sums of sensitivity values of the states are lower than the second threshold value, all states corresponding to the sums of sensitivity values are deleted from the input state vector.

As shown in Fig. 2, step S2 referring to the reduction of the states within the input state vector results in a reduced input state vector xr having a reduced number of states at corresponding time points. In a next step S3, a modified version of the first neural policy network PN1, namely a second neural policy network PN2, is learned by reinforcement learning. This second neural policy network generates the same output state vector y as the first policy network PN1 but it receives the reduced input state vector xr instead of the input state vector x.

In the embodiment of Fig. 2, the reward RE' used for learning the second policy network PN2 is modified in comparison to the reward RE. To do so, a modified simulation SI' of the conveyor system is used. The modified simulation SI' predicts one or more states of the conveyor system at a future time point based on the output action vector y at the current time point and the reduced input state vector xr where the reward is derived from the predicted one or more states of the conveyor system at the future time point. In an alternate embodiment, the simulation for obtaining the reward is not modified when learning the second neural policy network PN2. I.e., the simulation SI is kept for obtaining the reward for learning the second neural policy network PN2.

The learning in step S3 results in a learned/trained second neural policy network PN2. This trained second neural policy network is the result of the configuration process of the controller CON. The trained second neural policy network is stored for execution in the controller CON and can thereafter be used for controlling the conveyor system.

The invention as described in the foregoing has several advantages. Particularly, a controller for controlling a technical system is provided which has less input state vectors for the neural policy network used by the controller so that less computation resources are needed for executing the controller. Hence, the states of the technical system can be processed much faster in comparison to prior art controllers. Moreover, due to the reduced number of input states, the second neural policy network can be learned much faster so that the computational effort for configuring the corresponding controller is less in comparison to prior art controllers. Furthermore, due to the reduction of the input state vectors, a longer observation interval for the input states can be processed by the controller or the input states can be acquired with a higher frequency, thus enhancing the quality of the controller.

Independent of the grammatical term usage within the above description, individuals with male, female or other gender identities are included within the term.

**Claims**

1. A computer-implemented method for configuring a controller (CON) for a technical system (TS), where the method processes a first neural policy network (PN1) configured to generate an output action vector (y) which includes one

or more actions ($y_k$) to be performed on the technical system (TS) at a current time point based on an input state vector (x) fed to the first neural policy network (PN1) and including one or more states ($x_i$) of the technical system (TS) at a plurality of time points (tp) being subsequent time points comprising the current time point and one or more past time points, where the first neural policy network (PN1) is being learned or has been learned by reinforcement learning in dependency on a reward (RE) for the output action vector (y) generated by the first neural policy network (PN1), the method comprising the following steps:

a) processing a test data set (DS) by the first neural policy network (PN1), where the test data set (DS) comprises a plurality of test patterns (TPA), each test pattern (TPA) being another input state vector (x), where the processing of the test data set (DS) is based on an error backpropagation (EBP) performed for each test pattern (TPA), where the error backpropagation (EBP) propagates for each test pattern (TPA) an error ($E_t$) between the output action vector ($y_t$) generated by the first neural policy network (PN1) based on the input state vector ($x_t$) of a respective test pattern (TPA) and this output action vector ($y_{t,d}$) modified by a predetermined variation back through the first neural policy network (PN1) without changing weights between layers of the first neural policy network (PN1), thus resulting in a sensitivity value ($SV_i$) in the form of a residual error for each state ($x_i$) of the input state vector (x) at each time point (tp) of the plurality of time points (tp);

b) determining a reduced input state vector (xr) by deleting states ($x_i$) at time points (tp) from the input state vector (x) based on a threshold criterion (TC) applied to the sensitivity values ($SV_i$), where states ($x_i$) at time points (tp) having low sensitivity values ($SV_i$) are deleted in case that the low sensitivity values ($SV_i$) do not fulfill the threshold criterion;

c) learning a second neural policy network (PN2) configured to generate the output action vector (y) based on the reduced input state vector (xr) by reinforcement learning in dependency on a reward (RE') for the output action vector (y) generated by the second neural policy network (PN2).

2. The method according to claim 1, wherein in step b) the sensitivity values ($SV_i$) belonging to the same time point (tp) are summed over the states ($x_i$) of the input state vector (x), resulting in a sum of sensitivity values ($SV_i$) for each time point (tp) of the plurality of time points (tp), where the threshold criterion (TC) is such that states ($x_i$) at time points (tp) for which the sum of sensitivity values ($SV_i$) does not fulfill the threshold criterion (TC) are at least partially deleted from the input state vector (x).

3. The method according to claim 2, wherein the threshold criterion (TC) is such that the states ($x_i$) at time points (tp) associated with the N highest sums of sensitivity values are not deleted from the input state vector (x), where N is a predetermined natural number, or wherein the threshold criterion (TC) is such that the states ($x_i$) at time points (tp) associated with sums of sensitivity values ($SV_i$) above a predetermined threshold are not deleted from the input state vector (x).

4. The method according to claim 1, wherein in step b) the sensitivity values ($SV_i$) referring to the same state subset of one or more states ($x_i$) out of the states ($x_i$) of the input state vector (x) are summed over the time points (tp) of the plurality of time points (tp), resulting in a sum of sensitivity values ($SV_i$) for each state subset, where the threshold criterion (TC) is such that the states ($x_i$) of the state subsets for which the sum of sensitivity values ($SV_i$) does not fulfill the threshold criterion (TC) are at least partially deleted from the input state vector (x).

5. The method according to claim 4, wherein the threshold criterion (TC) is such that the states ($x_i$) of state subsets associated with the N highest sums of sensitivity values are not deleted from the input state vector (x), where N is a predetermined natural number, or wherein the threshold criterion (TC) is such that the states ($x_i$) of state subsets associated with sums of sensitivity values ($SV_i$) above a predetermined threshold are not deleted from the input state vector (x).

6. The method according to one of the preceding claims, wherein the reward (RE) for learning the first neural policy network (PN1) is obtained from a first simulation (SI) of the technical system (TS), particularly a simulation based on a physics-engine or a simulation based on a data driven model.

7. The method according to one of the preceding claims, wherein the reward (RE') for learning the second neural policy network (PN2) is obtained from a second simulation (SI') of the technical system (TS), particularly a simulation based on physics-engine or a simulation based on a data driven model.

8. The method according to one of the preceding claims, wherein the technical system (TS) is a conveyor system for pieces of goods (P), where the conveyor system comprises a conveyor path having several adjoining conveyors (C1, C2,..., C5) each driven by a respective drive (A1, A2, ..., A5), where the output action vector (y) for the first neural policy network (PN1) comprises the change of the velocities of at least some of the conveyors (C1, C2,..., C5) as actions ($y_k$).

9. The method according to claim 8, wherein the input state vector (x) for the first neural policy network (PN1) comprises:

- the velocities of at least some of the conveyors (C1, C2, ..., C5); and/or
- quantities related to the triggering of one or more sensors (S1.1, S1.2, S2, S3, S4, S5) by pieces of goods (P) passing the one or more sensors (S1.1, 51.2, S2, S3, S4, S5), where the one or more sensors (S1.1, 51.2, S2, S3, S4, S5) are arranged besides the conveyor path; and/or
- a vector having a fixed number of vector entries, where each vector entry is associated with a portion of the conveyor path and indicates how much of the portion is occupied by a piece of goods (P), where the conveyor path is divided in portions of equal lengths; and/or
- the position of one or more slots (T) on the conveyor (C5) at the end of the conveyor path.

10. The method according to claim 8 or 9, wherein the reward (RE) for learning the first neural policy network (PN2) and/or the reward (RE') for learning the second neural policy network (PN2) have a higher value in case that the condition is fulfilled that a piece of goods (P) at least partially lies on a predetermined location on the conveyor (C5) at the end of the conveyor path in comparison to the case that this condition is not fulfilled.

11. A computer program product with program code, which is stored on a machine-readable carrier, for carrying out a method according to one of the preceding claims when the program code is executed on a computer.

12. A computer program with program code for carrying out a method according to one of claims 1 to 10 when the program code is executed on a computer.

13. Controller for a technical system (TS), where the controller is configured by a method according to one of claims 1 to 10.

FIG 1

EP 4 389 648 A1

# FIG 2

PN1 (x, $x_i$, tp; y, $y_k$), RE (SI), DS (TPA)

| | |
|---|---|
| EBP | S1 |

$SV_i$

| | |
|---|---|
| TC | S2 |

xr

| | |
|---|---|
| RE', SI' | S3 |

PN2

## FIG 3

$y_t$  $E_t$  $y_{t,d}$

| 0 |
| --- |

| $\partial E/\partial w$ |
| --- |

| H |
| --- |

PN1

| $\partial E/\partial w$ |
| --- |

| I |
| --- |

$x_t$  $SV_i$

# FIG 4

EP 4 389 648 A1

FIG 5

EP 4 389 648 A1

# FIG 6

EP 4 389 648 A1

Europäisches
Patentamt

European
Patent Office

Office européen
des brevets

**EUROPEAN SEARCH REPORT**

Application Number

EP 22 21 5864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/397887 A1 (TOKIC MICHEL [DE] ET AL) 15 December 2022 (2022-12-15) <br> * paragraphs [0002], [0011], [0013], [0027], [0030], [0038]; figure 1 * <br> ----- | 1-12 | INV. <br> B65G15/24 <br> G06N3/082 <br> G06N3/092 <br> G06N3/045 |
| Y | PIZARROSO J ET AL: "NeuralSens: Sensitivity Analysis of Neural Networks", ARXIV.ORG, CORNELL UNIVERSITY LIBRARY, 201 OLIN LIBRARY CORNELL UNIVERSITY ITHACA, NY 14853, <br> 8 February 2021 (2021-02-08), XP081875413, <br> * abstract * <br> * Section 1 Introduction; Section 2.2 Partial derivatives; Section 2.3 Sensitivity measures * <br> ----- | 8-10 | |
| A | KIRAN RAVI ET AL: "Novel sensitivity method for evaluating the first derivative of the feed-forward neural network outputs", JOURNAL OF BIG DATA, <br> vol. 8, 10 June 2021 (2021-06-10), XP093003382, <br> DOI: 10.1186/s40537-021-00480-4 <br> Retrieved from the Internet: <br> URL:https://link.springer.com/content/pdf/10.1186/s40537-021-00480-4.pdf> <br> * abstract * <br> * Section 1 Introduction * <br> ----- <br> -/-- | 1-5 | TECHNICAL FIELDS SEARCHED (IPC) <br><br> B65G <br> G06N |

The present search report has been drawn up for all claims

| Place of search | Date of completion of the search | Examiner |
|---|---|---|
| The Hague | 18 April 2023 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 22 21 5864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BLAKEMAN SAM ET AL: "Selective particle attention: Rapidly and flexibly selecting features for deep reinforcement learning", NEURAL NETWORKS., vol. 150, 1 June 2022 (2022-06-01), pages 408-421, XP93039988, GB ISSN: 0893-6080, DOI: 10.1016/j.neunet.2022.03.015 * abstract * * figure 1 * | 1-5 | |
| Y | Anonymous: "Wayback Machine", , 30 November 2022 (2022-11-30), XP93039867, Retrieved from the Internet: URL:https://web.archive.org/web/20230000000000*/https://medium.com/mlearning-ai/what-is-state-in-reinforcement-learning-it-is-what-the-engineer-says-it-is-47add99a1121 [retrieved on 2023-04-18] * Section 1; page 8 * | 1-12 | |

TECHNICAL FIELDS SEARCHED (IPC)

The present search report has been drawn up for all claims

| Place of search | Date of completion of the search | Examiner |
|---|---|---|
| The Hague | 18 April 2023 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 21 5864

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2023

| Patent document cited in search report | Publication date | Patent family member(s) | Publication date |
|---|---|---|---|
| US 2022397887 A1 | 15-12-2022 | CN 114650958 A | 21-06-2022 |
| | | EP 3825263 A1 | 26-05-2021 |
| | | EP 4034482 A1 | 03-08-2022 |
| | | US 2022397887 A1 | 15-12-2022 |
| | | WO 2021099096 A1 | 27-05-2021 |

EPO FORM P0459

For more details about this annex : see Official Journal of the European Patent Office, No. 12/82